# EUROPEAN PATENT APPLICATION

(11) **EP 4 678 071 A2**
(43) Date of publication of application: **14.01.2026**
(21) Application number: 25219096.2
(22) Date of filing: 16.02.2023
(51) Int. Cl.: A47J 27/04

(54) **APPLIANCE FOR IMPROVED HEATING OF FOOD PRODUCTS USING STEAM**

(30) Priority: 17.02.2022 US 202263311254 P; 15.02.2023 US 202318110084
(62) Divisional of application: 23157129.0
(71) Applicant: Whirlpool Corporation, Benton Harbor, MI 49022 (US)
(72) Inventor: Dado, Megan Cheryl, 21024 Cassinetta di Biandronno (VA) (IT); Leitert, Andrew John, 21024 Cassinetta di Biandronno (VA) (IT); Ourasanah, Mansour, 21024 Cassinetta di Biandronno (VA) (IT); Rutter, Ryan James, 21024 Cassinetta di Biandronno (VA) (IT); Frakes, Lesley J., 21024 Cassinetta di Biandronno (VA) (IT); Haney, Edward James, 21024 Cassinetta di Biandronno (VA) (IT)
(74) Representative: PGA S.p.A., Milano, Succursale di Lugano

(57) **Abstract**

An appliance (10) for heating a food product (P) comprises a housing (12) having an interior (14), a vessel (40) receivable within the interior (14), a heating cavity (16) defined within the vessel (40), a heating element (24) adjacent a lower portion (26) of the heating cavity (16), a steamer basket (28) for receiving the food product (P), and a controller (64). The steamer basket (28) is receivable within the heating cavity (16) and defines a body (30) with a perforated lower wall (32) positionable above the lower portion (26) of the heating cavity (16) such that the food product (P) can be suspended above the lower portion (26) of the heating cavity (16) during heating of a quantity of water therein and such that steam generated by heating water within the lower portion (26) of the heating cavity (16) permeates the food product (P) for heating thereof. The controller (64) is configured to control the heating element (24) to heat the lower portion (26) of the heating cavity (16) to a heating temperature selected to cause evaporation of water received within the lower portion (26) of the heating cavity (16) at an evaporation rate selected to match a known absorption rate of the food product (P).

## Description

### FIELD OF THE INVENTION

The present invention generally relates to an appliance for heating food products using steam, and more specifically, to an appliance with features for improving the accuracy of water absorption of a food product during heating by steam.

### BACKGROUND OF THE INVENTION

Consistently and properly heating food products such as grains or legumes can be difficult, even when using existing "rice cooker" appliances. The most significant difficulties in consistent quality grain heating, in particular, can include achieving the appropriate water-to-grain ratio and implementing the ideal heating time. This may lead some users to refrain from heating unfamiliar types of grains due to a lack of knowledge of the appropriate water to grain ratio and heating time, as these may vary significantly among different grains.

Existing solutions implemented by other "multi cookers" include providing a printed list of grains or other food products with ratios of food product to water, including in the user manual or a printed label affixed on the appliance.

Document US2022/0000299A1 discloses a steam cooking apparatus comprising a food chamber, a heating arrangement, a water reservoir, a circulation system and a controller. The controller controls the heating arrangement to heat water from the water reservoir to create steam and further to heat the steam to create heated steam. Moreover, the controller controls the circulation system to circulate the heated steam around the food chamber.

### SUMMARY OF THE INVENTION

According to one aspect of the present invention, an appliance for heating a food product includes a housing having an interior defining a heating cavity, a lid enclosing an upper opening of the heating cavity, a water supply including a portion directed through the lid for introducing water to the heating cavity, a heating element adjacent a lower portion of the heating cavity, and a steamer basket receivable within the heating cavity. The steamer basket defines a body with a perforated lower wall positionable above the lower portion of the heating cavity such that the food product can be suspended above the lower portion of the heating cavity during heating of water therein and such that steam generated by heating water within the lower portion of the heating cavity flows over the food product for heating thereof. The steamer basket further includes a hollow shaft extending from a first end generally vertically aligned with an upper rim of the body to a second end in communication with a dispensing opening through the lower wall. The first end is positionable in contact with the portion of the water supply directed through the lid to further direct the water through the lower wall of the body without contacting the food product within the steamer basket.

According to another aspect of the present invention, an appliance for heating a food product includes a housing having an interior defining a heating cavity, a heating element adjacent a lower portion of the heating cavity, and a steamer basket receivable within the heating cavity. The steamer basket defines a body with a perforated lower wall positionable above the lower portion of the heating cavity such that the food product can be suspended above the lower portion of the heating cavity during heating of a quantity of water therein and such that steam generated by heating water within the lower portion of the heating cavity flows over the food product for heating thereof. The appliance further includes a controller configured to control the heating element to heat the lower portion of the heating cavity to a heating temperature selected to cause evaporation of water received within the lower portion of the heating cavity at an evaporation rate selected to match a known steam absorption rate of the food product.

According to yet another aspect of the present invention, an appliance for heating a food product includes a housing having an interior defining a heating cavity, a water supply including a supply line for introducing water to the heating cavity, a heating element, and a controller. The controller is configured to execute a heating cycle including controlling the heating element to heat a portion of the heating cavity to generate steam from a quantity of water within the heating cavity for heating of the food product within the heating cavity and, upon completion of the heating cycle, complete a purge function wherein water is removed from the supply line.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a perspective view of an appliance according to the present disclosure;
FIG. 2 is a front elevation view of the appliance;
FIG. 3 is a right side elevation view of the appliance;
FIG. 4 is a back elevation view of the appliance;
FIG. 5 is a cross-section view of the appliance taken along the line V-V in FIG. 2 ;
FIG. 6 is a perspective view of the appliance with a lid thereof open to a heating cavity within the appliance;
FIG. 7 is an assembly view of the appliance; and
FIG. 8 is a schematic view showing the system architecture of the appliance.

The components in the figures are not necessarily to scale, emphasis instead being placed upon illustrating the principles described herein.

### DETAILED DESCRIPTION

The present illustrated embodiments reside primarily in combinations of method steps and apparatus components related to a heating appliance. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

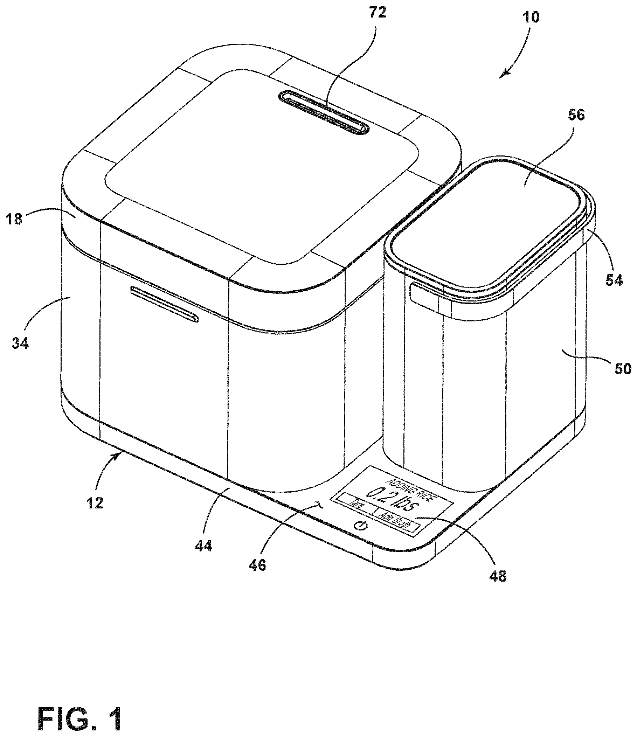

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

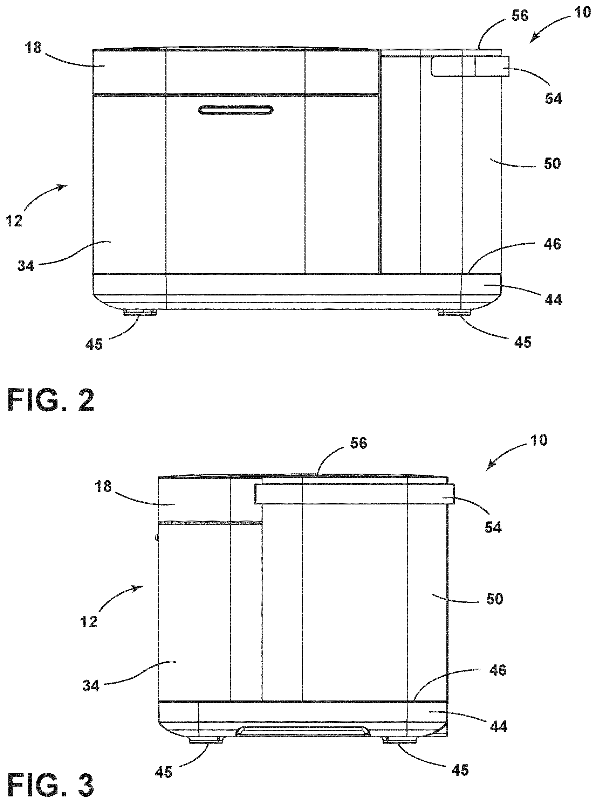

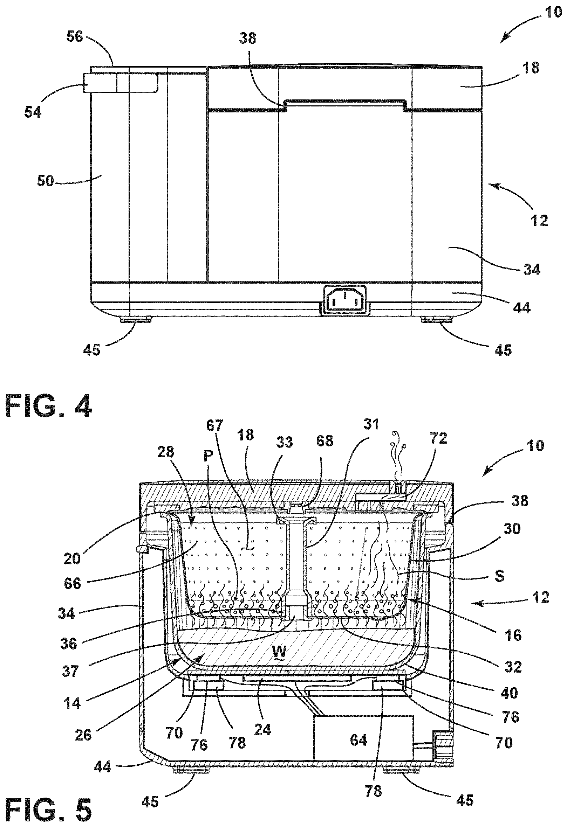

Referring to FIGS. 1-8, reference numeral 10 generally designates an appliance for heating a food product. The appliance 10 includes a housing 12 having an interior 14 defining a heating cavity 16, a lid 18 enclosing an upper opening 20 of the heating cavity 16, a water supply 22 including a portion directed through the lid 18 for introducing water to the heating cavity 16, a heating element 24 adjacent a lower portion 26 of the heating cavity 16, and a steamer basket 28 receivable within the heating cavity 16. The steamer basket defines a body 30 with a perforated lower wall 32 positionable above the lower portion 26 of the heating cavity 16 such that the food product P (FIG. 5) can be suspended above the lower portion 26 of the heating cavity 16 during heating of water W (FIG. 5) therein and such that steam S (FIG. 5) generated by heating the water W within the lower portion 26 of the heating cavity 16 flows over the food product P for heating thereof. The steamer basket 28 further includes a hollow shaft 31 extending from a first end 33 generally vertically aligned with an upper rim 35 of the body 30 to a second end 36 in communication with a dispensing opening 37 through the lower wall 32. The first end 33 is positionable in contact with the portion of the water supply 22 directed through the lid 18 to further direct an inflow of water through the lower wall 32 of the body 30 without contacting the food product P within the steamer basket 28.

In general, the present appliance may be of the type generally referred to as an automatic "grain maker", although it is to be appreciated that the appliance 10 can be used for heating a variety of food products, including various dried food products such as grains or legumes. Additionally, the present appliance 10 can be used or otherwise adapted for use in heating other food products (including those not initially provided in a dried state) using steam, as discussed further below. It is to be further appreciated that, as discussed herein, the heating of a "dried" food product is meant to encompass a food product that is initially in a dried state and that, during heating, the food product will be progressively moistened such that it is gradually transformed from the dried state. In this respect, when such food products are sufficiently moistened such that they would no longer be presently considered a dried food product, they may still be intended to be further cooked using the present appliance 10 to a further level of done-ness as determined by the appliance 10 and/or the user. The present appliance 10 is configured to heat various dried food products, such as grains and legumes, with minimal intervention or interaction by the user. As discussed herein, the appliance 10 may be used to heat food product using steam for various purposes, depending on the particular food product, including defrosting, reheating, blanching, or hydrating such food products. In this respect, some food products may be considered to be cooked by the present appliance, while others may simply be heated, steamed, or the like, without meeting certain specific definitions of "cooking."

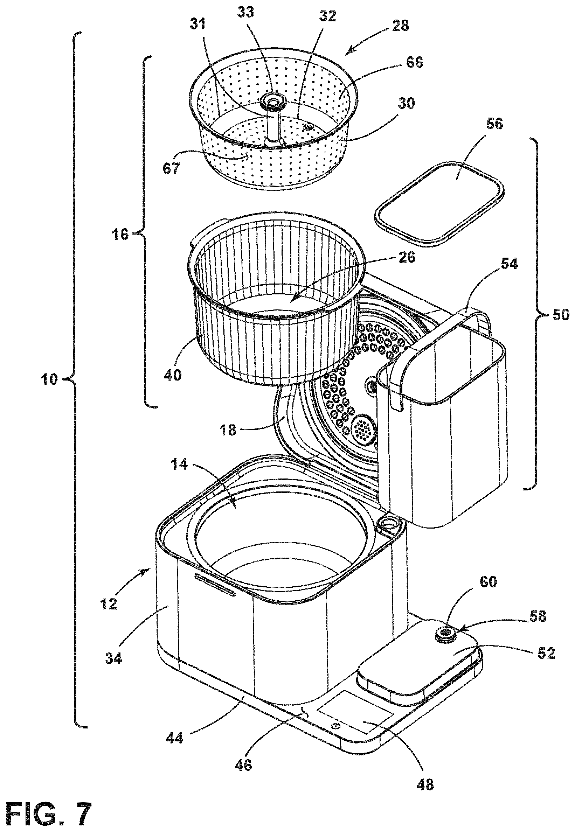

The general construction of the present appliance 10 is shown in FIGS. 1-7. In particular, the above-referenced housing 12 includes heating body 34 that defines the interior 14 (FIGS. 5 and 7). The lid 18 is operably connected to the heating body 34 by a hinge 36 so as to open and close the interior 14, including by operation of a button 38 that controls a latch for sealing the lid 18 over the interior 14 to a desired degree. In one aspect, the appliance 10 further includes a vessel 40 receivable within the interior 14 of the housing 12, as defined within the heating body 34, with the heating cavity 16 being defined within the vessel 40. The addition of the vessel 40 may provide for various additional heating functions, and may facilitate measurement of certain relevant weights before and during heating using the appliance 10, as discussed below. The vessel 40 may also be removable to facilitate cleaning of the heating cavity 16. In one aspect, the lid 18 can be configured with a recess 42 such that a portion of the vessel 40 is received therein when the lid 18 is closed, thereby allowing a portion of the vessel 40 to extend above the heating body 34 when the lid 18 is opened, which may facilitate removal of the vessel 40 from the interior 14.

As further shown, the heating body 34 is positioned on a base 44 configured for resting on a countertop (such as by the inclusion of a plurality of feet 45 on the lower portion of the base 44). The base 44 can extend laterally beyond the body 34 in at least one direction to define a flat upper surface 46 proximate the counter, or other supporting surface, on which the appliance 10 is placed. A graphical user interface ("GUI") 48 is positioned along a portion of the upper surface 46 of the base 44 and facilitates various inputs from the user, as discussed below, while presenting information regarding heating options and/or operation of the appliance 10, as also discussed below. In one aspect, the GUI 48 can include a 3.5" touch-screen liquid crystal display ("LCD"). In a further aspect, the GUI 48 can be positioned beneath the surface 46, which can be of a transparent dielectric material to allow operation of the touch-screen functionality of GUI 48, while providing a consistent visual appearance that obscures the presence of the GUI 48 when the appliance 10 is not in use.

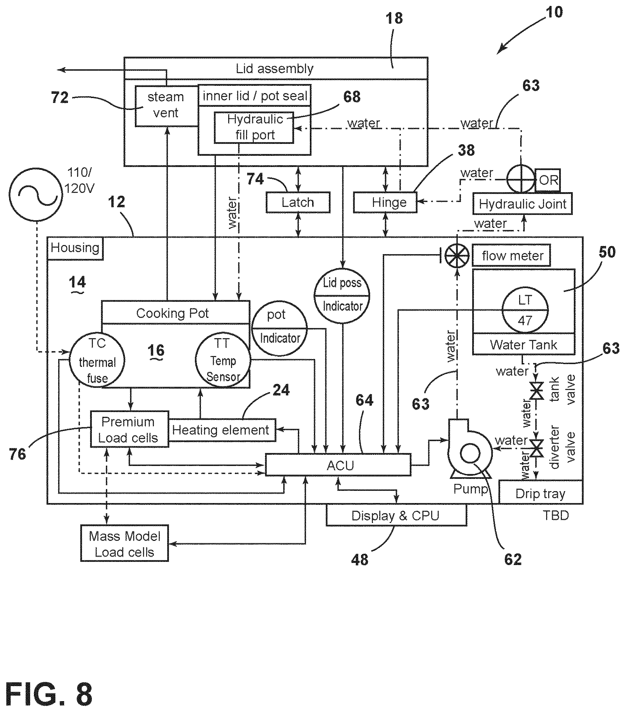

The appliance 10 further includes a water container 50 mounted on the base 44, including on a pedestal 52 (FIG. 7) disposed adjacent the heating body 34 and behind the GUI 48. In one aspect, the container 50 can be removable from the base 44 by disengagement from the pedestal 52. This can be accomplished by the container 50 being configured to rest on the pedestal 52 such that the user can simply lift the container 50 for removal from the base 44. The inclusion of a handle 54 can facilitate this lifting, as well as transportation of the container 50 and filling thereof at a water source (e.g., a kitchen faucet or a filtered water dispenser of a refrigerator or the like). A lid 56 can be removably included on the container 50 to allow filling thereof. The pedestal 52 and the container 50 can include an interengaging liquid distribution feature 58 with a release feature 60 on the pedestal 52 that operably and selectively couples with an outlet of the container to move a stopper within the outlet of the container 50. The stopper is configured to retain the water in the container 50 when the container 50 is unattached from the pedestal 52, but is operable to release the water when the stopper engages the release feature 60 of the pedestal 52 (which may happen automatically when the container 50 is placed on the pedestal 52. The base 44 is configured to distribute the water from the container 50 into the vessel 40, as described further below. In this respect, the housing 12 can also include a pump 62 (shown schematically in FIG. 8) that is configured to force water that flows out of the container 50 under gravity, through a supply line 63 that extends through the base 44 and upward through the heating body 34, and through the lid 18 to deliver a controlled volume of water into the heating cavity 16. In one implementation, the pump 62 can be activated by a controller 64 included within the housing 12 (in one aspect, both the pump 62 and the controller 64 can be positioned within the base 44, although other arrangements are possible) at a rate known by and implemented by the controller 64. In this manner, the controller 64 can operate the pump 62 to distribute a known volume of water into the heating cavity 16. In another aspect, the water level in the container 50 can be directly monitored by the controller 64 such that the volume distributed to the heating cavity 16 can be determined by the reduction in volume of the water in the container 50. This could be accomplished by the incorporation of one or more hall-effect sensors or weight transducers (76) or other sensors in the pedestal 52. As discussed below, the appliance 10 may be configured to begin operation with water supply 22 in an empty state such that the volume of water added to the heating cavity 16 can be determined by accounting for the volume of water upstream of the heating cavity 16 needed to introduce water therein.

As further shown in FIGS. 5-7, the above-mentioned steamer basket 28 is receivable within the vessel 40. Specifically, the steamer basket 28 is positionable within the vessel 40 to retain the dry food product to be cooked. The steamer basket 28 is specifically structured to maintain the dry food product P out of the water W received in the bottom of the vessel 40 as the water W is heated to form the steam S used to cook the food product (as shown in FIG 5). The steamer basket 28 is, accordingly, perforated by a number of holes 66 along the lower wall 32 and, optionally, the side wall 67 thereof to allow the steam S to enter the basket 28 and contact the food product P for absorption and heating.

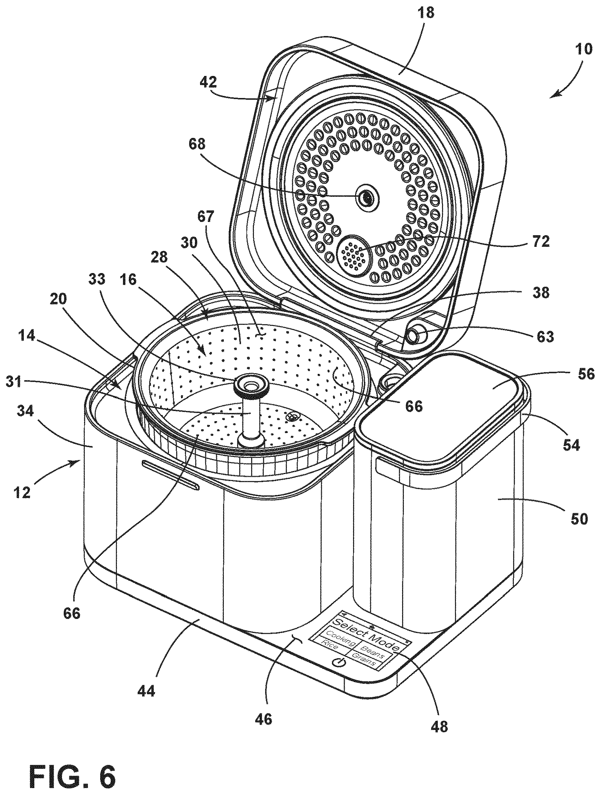

As discussed previously, the appliance 10 is configured to deliver water stored in the container 50 to the vessel 40. More particularly, the lid 18 includes a nozzle 68 that is centrally disposed within the interior recess 42 of the lid 18 and is connected with the container 50 by the water supply 22 to introduce water to the vessel 40. As shown in FIG. 6, the supply line 63 is separated along an interface between the heating body 34 and the lid 18 such that it is interrupted when the lid 18 is open. This can result in the appliance 10 only being operable to fill the vessel 40 when the lid 18 is closed. In this manner, the steamer basket 28 is to be loaded with the food product P to be cooked prior to the introduction of water to the heating cavity 16. For some foods, it may be undesirable for the cool liquid water output from the nozzle 68 in the lid 18 to contact the food product P prior to heating with the generated steam S. Accordingly, the present steamer basket 28, as discussed briefly above, is configured to direct the flow of water from the nozzle 68 past, and out of contact with, the food product for introduction to the heating cavity 16. In particular, as discussed above, the steamer basket 28 includes the water shaft 31 that extends upward from the center of the bottom wall 32 of the body 30 to contact, or come into close proximity of, the nozzle 68 to receive the water output therefrom. The water shaft 31 is hollow and is open through the opening 37 in the body 30 of the basket 28 to allow the water to flow into the lower portion of the heating cavity 16 without contacting the food product. In one aspect, the first end 32 can be positioned to be adjacent, but not in contact with the nozzle 68 such that the closure of the lid 18 does not interfere with any weight measurements obtained for the vessel 40 and basket 28, as discussed further below. Additionally, the water shaft 31 can also be used as a handle for lifting the basket 28 out of the vessel 40 after the heating cycle is complete and/or holding the basket 28 with a food product in the form of a grain therein under a water source during pre-rinsing of the grain.

The housing 12 is also configured to detect a weight of the food product P and/or water W placed within the heating cavity 16. In particular, the housing 12 can include one or more weight scales 70 communicatively coupled to the controller 64, such that the controller 64 receives signals from the scale 70 and uses the signal(s) to determine a change in weight of the vessel 40 and steamer basket 28. In one example, a lower surface of the interior 14 that supports the vessel 40 can be moveable with respect to the adjacent housing 12 and at least partially supported by the scales 70 such that the total weight of the vessel 40 (including the steamer basket 28 and any substance of articles present in the vessel 40 and/or basket 28 bear on the sensors. Depending on the operational state of the controller 64 and/or a detectable condition of the appliance 10 (e.g., lid 18 open or closed), the controller 64 can determine an increase in weight on the scales 70 with the addition of food product P or water to the heating cavity 16. When weight information is received by the controller 64, for example, with the lid 18 open, the controller 64 can be configured to use the weight change information to infer a weight of food product added to the steamer basket 28 (in further aspects, the weight information can be used to determine if the steamer basket 28 is present or not when food product is added to the heating cavity 16). In one aspect, when the controller 64 receives additional weight change information after closure of the lid 18, the controller 64 can be configured to determine a liquid volume added to the heating cavity 16, including as a check or in substitution for the pump- or sensor-based water volume determination discussed above. As discussed further below, the controller 64 can control the addition of water to the heating cavity 16 based on the weight of the food product by operation of the water supply 22. Additionally or alternatively, the controller 64 may be operably coupled to the GUI 48 to display a suggested liquid volume based on the weight of food product detected by the scales 70 prior to closure of the lid 18. For example, the user may select on the GUI 48 that the liquid to be used for heating is a broth that is to be added directly to the heating cavity 16 by the user. In such configurations, the controller 64 may detect the weight of the broth added and display, for example, a remaining amount needed as the user adds the broth.

In further detail, the appliance 10 can specifically configure the amount of liquid used for the heating process based on the particular food product being cooked in combination with the detected weight thereof. In this respect, the appliance 10 aims to eliminate the guesswork involved in grain heating so the user can achieve improved heating results over a variety of rice, grains, and beans, for example. In this manner, the controller 64 can be programmed with an algorithm and/or lookup table with specific heating information for a variety of food products. The algorithm and/or lookup table can include, for example, correlations between the weight of the stored food products and corresponding optimized volumes of water for heating (as discussed further below, heating cycle information can also be associated with the various stored food types) to produce generally desired results.

In operation of the thusly-configured appliance 10, the user will place the food product to be cooked directly into the heating cavity 16 (including by placement into the steamer basket 28, when steaming is desired), select the food product type from, for example, a list presented on the GUI 48 (including, in one aspect, whether any grain-type food products are dry or rinsed), and the desired heating liquid (water or broth/stock). If the user selects water, the controller 64 will weigh the food product using integrated scale(s) 70 so that the controller 64, upon closure of the lid 18, can measure and dispense the desired volume of water from the water container 50, or other reservoir, for the amount of selected food product before implementing a preprogrammed heating cycle. If the user selects broth/stock, the controller 64 will weigh the food product using the integrated scale(s) 70 and will display the quantity of broth/stock to be added by the user for the detected amount of the selected food product before implementing a preprogrammed heating cycle. In one example, the controller 64 can include heating information (such as specific product-liquid ratios and heating cycle information for rice, including white, brown, basmati, jasmine, wild, and sushi rice; grains including oats, quinoa, grits (polenta), and barley; legumes, including lentils, kidney beans, chickpeas, black beans, and red (pinto) beans; and pasta, including couscous. Additionally, the controller 64 can include additional information (and can present corresponding options to the user) regarding adjustable presets and/or texture settings (including only for certain selectable food types). For example, the controller 64 can allow the user to select the particular texture for white rice (soft, hard, regular), among other food products.

As shown in FIGS. 5 and 8, the housing 12 also encloses a heating element 24 disposed within the base 44, beneath the heating body 34. The heating element 24 is configured for use in heating the food product within the heating cavity 16. The heating element 24 may be a resistive electrical heating element with corresponding control circuitry for operation by the controller 64. It is also contemplated variations of the heating element 24 can be induction heating element(s). The food product within the heating cavity 16 can be cooked at a specified temperature (within an available operating range for appliance 10) for a length of time determined by the controller 64 based upon the weight detected using the scale(s) 70 and the user inputs regarding the type of food product being cooked, as discussed above. In particular, controller 64 is configured with a variety of food product types and is configured to present the various food product options on the GUI 48 to be selected by the user. Based upon the selection, the controller 64 is configured to operate the heating element 24 to cook the food product. As discussed above, the primary heating mode implemented by the appliance 10 can be steam heating, wherein the heating element 24 is used to heat the lower portion 26 of the heating cavity 16 (e.g., as defined within the vessel 40) to generate steam S from the volume of liquid (water or broth/stock, as discussed above) contained within heating cavity 16. The steam S generated by this heating, thusly impinges on the food product P within the steamer basket 28 where it heats and is absorbed by the food product P for hydration and heating thereof. Accordingly, the controller 64 can be programmed or otherwise configured for operation to generate steam from the water within the heating cavity 16 by, for example, controlled boiling or simmering of the water W, according to the desired heating profile of the particular selected food product, as additional stored parameters with the product-to-liquid ratios discussed above.

In additional aspects, the appliance 10 can also be configured with non-steam based heating settings such as sauté, simmer, and poach to allow additional functionality, including without the use of the steamer basket 28. In one example, the controller 64 can be configured to operate the heating element 24 to sauté dry grains and other ingredients, directly on the lower surface of the vessel 40, before or after steaming, for example. The controller 64 may also be configured to allow operation in a manual mode (including at a selected temperature) for poaching and/or boiling of food products directly within liquid received in the vessel 40. This mode may allow the user to poach foods like eggs and boil pasta or potatoes. Additionally, the controller 64 may allow for a delayed start mode, wherein the user can specify a specific time at which they would like the selected food product to finish heating. It is also contemplated that the appliance 10 can be configured for pressure-cooking, such as by selective closing of steam outlet 72 in the lid 18 and by controlled locking of the latch 74 that maintains the lid 18 in the closed condition, along with additional liquid volume and/or food product cycle information. The controller 64 can then use the product type and weight information to determine when to start the food product cycle. In a similar manner, the controller 64 can implement a "keep warm" mode in which the controller 64 can maintain the heating element 24 in a low power state to maintain the cooked food product at a generally warm temperature (without unnecessary drying or additional cooking), for example, for up to 8-12 hours after the heating cycle ends.

In an additional aspect, the controller 64 can be configured to control the heating element 24 to heat the lower portion 26 of the heating cavity 16 to a heating temperature selected to cause evaporation of the water W received within the lower portion 26 of the heating cavity 16 at an evaporation rate selected to match a known steam absorption rate of the dried food product, as indicated by the above-described user selection. More particularly, the appliance 10 can be configured to optimize performance by determining the rate of liquid evaporation in combination with the rate absorption into the food product being cooked. In this respect, the controller 64 can be configured to monitor and control the temperature of the water W received in the heating cavity 16 and can use the temperature information to calculate the corresponding expected evaporation rate of the water W, as it is converted to steam S. This rate can be compared against a known absorption rate of the specific type of dry food product (e.g., as selected by the user via GUI 48) being cooked to determine quantity of the water that is expected to have been absorbed by the food product on an ongoing basis. In this respect, the controller 64 can be configured to operate the heating element 24 to achieve an expected evaporation rate that best matches the known absorption rate for the selected food product (understanding that it is unlikely that all of the steam S will be absorbed).

In a further aspect, the controller 64 can continue to monitor the signal(s) from the scales 70 to determine the weight of the vessel 40 on an ongoing basis. The controller 64 can use this information to determine an actual absorption rate of steam S generated by heating the water W within the lower portion 26 of the heating cavity 16. As can be appreciated, the evaporation of water W will reduce the weight of the water W within the vessel 40, while the absorption of the steam S into the food product will increase the weight of the food product within the vessel 40. Most of the steam S not absorbed by the food product will escape through the steam vent 72, resulting in an overall decrease in weight of the vessel 40. The controller 64 can use the expected evaporation and absorption rates to determine the anticipated reduction in weight of vessel 40, for example, which can be compared with the actual weight information to determine if the absorption of steam into the food product meets the expected rate. The controller 64 can then adjust the heating time in response to the actual absorption rate being different from the expected absorption rate. For example, the heating time can be reduced if the absorption is higher than expected to avoid over-cooking or producing mushy grains. Similarly, the controller 64 can increase the heating time if the absorption rate is lower than expected. In a further aspect, the controller 64 can use the pump 62 to introduce additional water W to the heating cavity 16, if it is determined that additional water is needed (this can also be done when the initial heating liquid was broth or stock).

The appliance 10 can also include functionality for maintaining the operating condition of water lines 63 connecting the container 50 with the nozzle 68. More specifically, the controller 64 can be configured to execute a "purge" function wherein the pump 62 is run dry to force air through the lines 63 after the heating cycle has been completed. In one aspect, the purge function can be executed after receiving confirmation, such as from the GUI 48, that the finished food product has been removed from the appliance 10. In a variation of appliance 10, steam can be produced using a boiler within the base 44 and positioned within the supply lines 63. In this implementation, a quantity of water can be boiled at the end of the cycle (and/or after removal of the cooked food product) to use steam to force any remaining water from the lines 63 upstream of the boiler. Additionally or alternatively, the controller 64 can execute a self-clean operation, where fresh water is fed from the filled container 50 to the heating cavity 16 when in an empty state, according to a specific program (and, optionally, including a manufacturer recommended cleaner or de-scaler). In a similar manner, the controller 64 can execute a prewash function, where a predetermined quantity of water is pumped from the container 50 to the heating cavity 16 for steam generation using heater element 24 to steam-clean any residue from the interior of the vessel 40, the steamer basket 28 and/or the interior of the lid 18 prior to use of the appliance 10.

As discussed above, the appliance 10 includes one or more scales 70 configured to detect a weight of the dry food product placed within the heating cavity 16. In one aspect, also discussed above, the weight information is useable by the controller 64 to control aspects of the heating cycle, including during use of the heating element 24. Because the transducers 76 used in certain implementations of the scales 70 are affected by heat (which causes expansion of the components of the transducer), the weight that corresponds with the signal value received from the scales 70 can vary if the heating element 24 causes heating of the scales 70. In this respect, the controller 64 can be configured to mitigate the effect of heat on the transducer signal(s). This can be useful, for example, when a new heating cycle is initiated immediately after a prior cycle, when the grain maker 10 is still warm, and the food product is weighed to determine the desired liquid volume for heating, in addition to when the vessel 40 weight is monitored during heating. This mitigation can be achieved by the incorporation of physical structures, including the addition of heat sinks 78 to the scales 70 and/or the direction of a cooling air flow path through the base 44. Additionally or alternatively, the mitigation can be done by configuring the controller 64 to compensate for the effect of heat on the transducer signals by computing the change in signal value based on the change in temperature of the transducer(s). This change can be inferred using the information used to control the heating element 24, along with the known architecture of the system (and/or software modeling of the same) or using an ambient temperature sensor within the base 44.

The invention disclosed herein is further summarized in the following paragraphs and is further characterized by combinations of any and all of the various aspects described therein.

According to another aspect of the present disclosure, an appliance for heating a food product includes a housing having an interior defining a heating cavity, a lid enclosing an upper opening of the heating cavity, a water supply including a portion directed through the lid for introducing water to the heating cavity, a heating element adjacent a lower portion of the heating cavity, and a steamer basket receivable within the heating cavity. The steamer basket defines a body with a perforated lower wall positionable above the lower portion of the heating cavity such that the food product can be suspended above the lower portion of the heating cavity during heating of water therein and such that steam generated by heating water within the lower portion of the heating cavity flows over the food product for heating thereof. The steamer basket further includes a hollow shaft extending from a first end generally vertically aligned with an upper rim of the body to a second end in communication with a dispensing opening through the lower wall. The first end is positionable in contact with the portion of the water supply directed through the lid to further direct the water through the lower wall of the body without contacting the food product within the steamer basket.

The appliance further includes a vessel receivable within the interior of the housing, the heating cavity is defined within the vessel, and the steamer basket is receivable within the vessel.

According to yet another aspect, an appliance for heating a food product includes a housing having an interior defining a heating cavity, a heating element adjacent a lower portion of the heating cavity, and a steamer basket receivable within the heating cavity. The steamer basket defines a body with a perforated lower wall positionable above the lower portion of the heating cavity such that the food product can be suspended above the lower portion of the heating cavity during heating of a quantity of water therein and such that steam generated by heating water within the lower portion of the heating cavity flows over the food product for heating thereof. The appliance further includes a controller configured to control the heating element to heat the lower portion of the heating cavity to a heating temperature selected to cause evaporation of water received within the lower portion of the heating cavity at an evaporation rate selected to match a known steam absorption rate of the food product.

The appliance further includes at least one weight sensor operably associated with the heating cavity for monitoring a weight thereof, and the controller is further configured to monitor an actual absorption rate of steam generated by heating the quantity of water within the lower portion of the heating cavity using at least one weight sensor and to change a heating time over which the quantity of water is heated in response to the actual absorption rate being different than the known steam absorption rate.

The appliance further includes a water supply for introducing the quantity of water to the lower portion of the heating cavity, and the controller is further configured to increase a heating interval and to increase the quantity of water within the lower portion of the heating cavity using the water supply in response to the actual absorption rate being lower than the known steam absorption rate.

According to yet another aspect, an appliance for heating a food product includes a housing having an interior defining a heating cavity, a water supply including a supply line for introducing water to the heating cavity, a heating element, and a controller. The controller is configured to execute a heating cycle including controlling the heating element to heat a portion of the heating cavity to generate steam from a quantity of water within the heating cavity for heating of the food product within the heating cavity and, upon completion of the heating cycle, complete a purge function wherein water is removed from the supply line.

The water supply further includes a water reservoir and a pump for forcing water from the reservoir through the supply line, and when completing the purge function, the controller closes the water reservoir from the pump and causes the pump to run, thereby forcing air through the supply line to remove water from the supply line
The controller is further configured to execute a self-cleaning function, wherein water is moved, using the pump, from the reservoir and through the supply line until the reservoir reaches an empty condition, the controller further running the pump with the reservoir in the empty condition for a predetermined time interval to purge the supply line.

According to yet another aspect, an appliance for heating a food product includes a housing having an interior defining a heating cavity, a heating element, a controller configured to execute a heating cycle including controlling the heating element to heat a portion of the heating cavity to generate steam from a quantity of water within the heating cavity for heating of the food product within the heating cavity, and at least one weight sensor assembly operably associated with the heating cavity and with the controller for monitoring a weight of contents within the heating cavity. At least one of the weight sensor assembly or the controller is configured to mitigate an effect of heat from the heating element on a measurement obtained from a transducer within the weight sensor assembly.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) within the scope of protection defined by the claims. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations.

The exemplary structures and processes disclosed herein are for illustrative purposes and are not to be construed as limiting.

## Claims

1. An appliance (10) for heating a food product (P), comprising:
a housing (12) having an interior (14),
a vessel (40) receivable within the interior (14),
a heating cavity (16) defined within the vessel (40),
a heating element (24) adjacent a lower portion (26) of the heating cavity (16),
a steamer basket (28) for receiving the food product (P), the steamer basket (28) being receivable within the heating cavity (16) and defining a body (30) with a perforated lower wall (32) positionable above the lower portion (26) of the heating cavity (16) such that the food product (P) can be suspended above the lower portion (26) of the heating cavity (16) during heating of a quantity of water therein and such that steam generated by heating water within the lower portion (26) of the heating cavity (16) permeates the food product (P) for heating thereof, and
a controller (64) configured to control the heating element (24) to heat the lower portion (26) of the heating cavity (16) to a heating temperature selected to cause evaporation of water received within the lower portion (26) of the heating cavity (16) at an evaporation rate selected to match a known absorption rate of the food product (P), in particular a known steam absorption rate of the food product (P).

2. The appliance (10) of claim 1, further including at least one weight sensor (78) operably associated with the heating cavity (16) for monitoring a weight thereof, wherein the controller (64) is further configured to monitor an actual absorption rate of steam generated by heating the quantity of water within the lower portion (26) of the heating cavity (16) using at least one weight sensor (78) and to change a heating time over which the quantity of water is heated in response to the actual absorption rate being different than the known steam absorption rate.

3. The appliance (10) of claim 2, further including a water supply (22) for introducing the quantity of water to the lower portion (26) of the heating cavity (16), wherein the controller (64) is further configured to increase a heating interval and to increase the quantity of water within the lower portion (26) of the heating cavity (16) using the water supply (22) in response to the actual absorption rate being lower than the known steam absorption rate.

4. The appliance (10) of claim 2 or claim 3, wherein the controller (64) is further configured to detect an amount of water moving through the water supply (22) during monitoring of the actual absorption rate or the actual absorption weight, and wherein monitoring the actual absorption rate includes comparing the amount of water moving through the water supply (22) to a change in weight of product detected using the at least one weight sensor (78).

5. The appliance (10) of any one of claims 2 to 4, wherein the controller (64) is further configured to detect a presence of the steamer basket (28) within the heating cavity (16) using the at least one weight sensor (78).

6. The appliance (10) of any of the preceding claims, wherein the controller (64) controls the heating element (24) during execution of a heating cycle, and wherein upon completion of the heating cycle, the controller (64) completes a purge function wherein water is removed from the supply line (63),
optionally wherein the water supply (22) includes a supply line (63) for introducing water to the heating cavity (16), and/or
optionally wherein the water supply (22) further includes a water reservoir (50) and a pump (62) for forcing water from the reservoir (50) through the supply line (63); and wherein, when completing the purge function, the controller (64) closes the water reservoir (50) from the pump (62) and causes the pump (62) to run, thereby forcing air through the supply line (63) to remove water from the supply line (63), and/or
optionally wherein the controller (64) is further configured to execute a self-cleaning function, wherein water is moved, using the pump (62), from the reservoir (50) and through the supply line (63) until the reservoir (50) reaches an empty condition, the controller (64) further running the pump (62) with the reservoir (50) in the empty condition for a predetermined time interval to purge the supply line (63).

7. The appliance (10) of any of the preceding claims, further including at least one weight sensor assembly (70) operably associated with the heating cavity (16) and with the controller (64) for monitoring a weight of contents within the heating cavity (16), at least one of the weight sensor assembly (70) or the controller (64) being configured to mitigate an effect of heat from the heating element (24) on a measurement obtained from a transducer (78) within the weight sensor assembly (70).

8. The appliance (10) of any of claims 1 to 3, wherein the housing (12) defines a base (44) and a heating body (34) extending from the base (44), the heating body (34) defining the heating cavity (16) and the base (44) further defining a pedestal (52) on a portion of the base (44) that extends outwardly from the heating body (34), the pedestal (52) being configured to removably retain a water container thereon and to connect the water container with the water supply (22), optionally wherein the base (44) further defines an interface on a portion thereof extending outwardly from the heating body (34) and from the pedestal (52), the interface being configured for displaying information regarding a heating operation of the controller (64) and to receive a user input for at least on parameter of the heating operation, the information regarding the heating operation being in particular a fill amount of water determined based on at least one parameter.

9. An appliance (10) for heating a food product (P), including:
a housing (12) having an interior (14) defining a heating cavity (16),
a heating element (24) adjacent a lower portion (26) of the heating cavity (16), and
a steamer basket (28) receivable within the heating cavity (16),
wherein the steamer basket (28) defines a body (30) with a perforated lower wall (32) positionable above the lower portion (26) of the heating cavity (16) such that the food product (P) can be suspended above the lower portion (26) of the heating cavity (16) during heating of a quantity of water therein and such that steam generated by heating water within the lower portion (26) of the heating cavity (16) flows over the food product (P) for heating thereof, and wherein the appliance (10) further includes a controller (64) configured to control the heating element (24) to heat the lower portion (26) of the heating cavity (16) to a heating temperature selected to cause evaporation of water received within the lower portion (26) of the heating cavity (16) at an evaporation rate selected to match a known absorption rate of the food product (P), in particular a known steam absorption rate of the food product (P).

10. The appliance (10) of claim 9, further including at least one weight sensor (78) operably associated with the heating cavity (16) for monitoring a weight thereof, wherein the controller (64) is further configured to monitor an actual absorption rate of steam generated by heating the quantity of water within the lower portion (26) of the heating cavity (16) using at least one weight sensor (78) and to change a heating time over which the quantity of water is heated in response to the actual absorption rate being different than the known steam absorption rate.

11. The appliance (10) of claim 9 or claim 10, further including a water supply (22) for introducing the quantity of water to the lower portion (26) of the heating cavity (16), wherein the controller (64) is further configured to increase a heating interval and to increase the quantity of water within the lower portion (26) of the heating cavity (16) using the water supply (22) in response to the actual absorption rate being lower than the known steam absorption rate.

12. An appliance (10) for heating a food product (P), including:
a housing (12) having an interior (14) defining a heating cavity (16),
a water supply (22) including a supply line (63) for introducing water to the heating cavity (16),
a heating element (24), and
a controller (64),
wherein the controller (64) is configured to execute a heating cycle including controlling the heating element (24) to heat a portion of the heating cavity (24) to generate steam from a quantity of water within the heating cavity (24) for heating of the food product (P) within the heating cavity (24) and, upon completion of the heating cycle, complete a purge function wherein water is removed from the supply line (63).

13. The appliance (10) of claim 12, wherein the water supply (22) further includes a water reservoir (50) and a pump (62) for forcing water from the reservoir (50) through the supply line (63), and when completing the purge function, the controller (64) closes the water reservoir from the pump (62) and causes the pump (62) to run, thereby forcing air through the supply line (63) to remove water from the supply line (63).

14. The appliance (10) of claim 12 or claim 13, wherein the controller (64) is further configured to execute a self-cleaning function, wherein water is moved, using the pump (62), from the reservoir (50) and through the supply line (63) until the reservoir (50) reaches an empty condition, the controller (64) further running the pump (62) with the reservoir (50) in the empty condition for a predetermined time interval to purge the supply line (63).

15. An appliance (10) for heating a food product (P), including:
a housing (12) having an interior (14) defining a heating cavity (16),
a heating element (24),
a controller (64) configured to execute a heating cycle including controlling the heating element (24) to heat a portion of the heating cavity (16) to generate steam from a quantity of water within the heating cavity (16) for heating of the food product (P) within the heating cavity (16), and
at least one weight sensor assembly (70) operably associated with the heating cavity (16) and with the controller (64) for monitoring a weight of contents within the heating cavity 16),
wherein at least one of the weight sensor assembly (70) or the controller (64) is configured to mitigate an effect of heat from the heating element (24) on a measurement obtained from a transducer (76) within the weight sensor assembly (70).
